# EUROPÄISCHE PATENTSCHRIFT

(11) **EP 1 145 620 B1**
(45) Veröffentlichungstag und Bekanntmachung des Hinweises auf die Patenterteilung: **02.11.2005**
(21) Anmeldenummer: 01107120.6
(22) Anmeldetag: 22.03.2001
(51) Int. Cl.: A01D 78/10

(54) **Heuwerbungsmaschine**
Haymaking machine
Machine de fenaison

(30) Priorität: 12.04.2000 DE 10017967
(43) Veröffentlichungstag der Anmeldung: 17.10.2001
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-A- 0 845 199
- EP-A- 0 950 347
- DE-B- 2 127 701
- FR-A- 2 790 358

## Beschreibung

Die Erfindung betrifft eine Heuwerbungsmaschine gemäß dem Oberbegriff des Anspruchs 1. Eine derartige Maschine ist aus z.B. EP-A-0 950 347 bekannt.

Derartige ein oder mehrere Arbeitsorgane aufweisende Heuwerbungsmaschinen können zumindest in wenigstens zwei Stellungen, nämlich der Arbeits- und der Transportstellung, zu dem sie bewegenden Trägerfahrzeug betrieben werden. Um das von den umlaufenden Rechorganen aufgenommene und an anderer Stelle wieder abgegebene Erntegut in einem Erntegutschwaden bestimmter Abmessungen abzulegen, können dem wenigstens einem Arbeitsorgan oder wenigstens einem von mehreren Arbeitsorganen ein Schwadformer zugeordnet sein, der in der Arbeitsstellung die Breite des Erntegutschwadens begrenzt. Zur Einhaltung der im Straßenverkehr zulässigen Breite der Heuwerbungsmaschine muß dieser Schwadformer in der Transportsstellung in aller Regel in eine von der Arbeitsstellung abweichende Lage verbracht werden.

Aus der europäischen Patentanmeldung EP 0 845 199 ist eine Heuwerbungsmaschine bekannt geworden, deren in Fahrtrichtung zueinander gestaffelt angeordneten als Rechkreisel ausgeführten Arbeitsorgane mittels am Hauptrahmen und am hinteren Arbeitsorgan adaptierter hydraulischer Hubzylinder von einer Transportstellung in eine Arbeitsstellung und umgekehrt verschwenkt werden können. Die Rotationsbewegung der Arbeitsorgane und deren Lage in der Arbeitsstellung ist so aufeinander abgestimmt, dass die zusammenarbeitenden Arbeitsorgane einen Doppelschwaden formen, dessen Breite durch den dem hinteren Rechkreisel seitlich zugeordneten Schwadformer begrenzt wird. Der Schwadformer ist über einen Koppelmechanismus mit dem hinteren Rechkreisel und dem Tragrahmen der Heuwerbungsmaschine in der Weise verbunden, dass der Schwadformer beim Verschwenken des rückwärtigen Arbeitsorgans von der Transport- in die Arbeitsstellung und umgekehrt von einer kreiselnahen in eine kreiselferne Lage aus- und einschwenkt. Aufgrund dessen, dass der Koppelmechanismus als Parallelogrammmechanismus ausgeführt ist, der über eine Koppelstange mit dem Tragrahmen des hinteren Rechkreisels in Wirkverbindung steht, kann der Schwadformer stets nur eine Arbeitsstellung einnehmen, sodass die Heuwerbungsmaschine nur in der Lage ist einen einzigen Erntegut-Großschwaden zu formen. Da das Fahrwerk des den Schwadformer aufnehmenden hinteren Arbeitsorgans über einen Hubzylinder verstellt wird der nicht zugleich auch die Lage des Schwadformers beeinflusst, muss bei einer derartigen Ausführung das Trägerfahrzeug stets eine bestimmte Wegstrecke zurücklegen, nämlich genau die Strecke die notwendig ist, damit die quer zur Fahrtrichtung gestellten Laufräder des rückwärtigen Rechkreisels wieder in Fahrtrichtung weisen, bevor der an die Lageänderung dieses hinteren Rechkreisels gekoppelte Schwenkmechanismus den Schwadformer in die erforderliche Lage verbracht hat. Zudem befindet sich der Schwadformer in der Transportstellung in einer seitlich neben dem ihm zugeordneten Arbeitsorgan liegenden Position, sodass unter dem Gesichtspunkt zulässiger Transportbreiten eine derartige Anordnung des Schwadformers in der Transportstellung zu Lasten des möglichen Durchmessers der Arbeitsorgane und damit der erreichbaren Arbeitsbreite geht.

Der Erfindung liegt deshalb die Aufgabe zugrunde, eine Heuwerbungsmaschine so zu gestalten, dass der dem wenigstens einen Arbeitsorgan zugeordnete Schwadformer auf konstruktiv einfache Weise selbsttätig von der Transportstellung in unterschiedliche Arbeitsstellungen bewegt werden kann, wobei die unterschiedlichen Arbeiststellungen sowohl die Bildung eines Emtegut-Großschwaden als auch die Bildung von wenigstens zwei Erntegut-Einzelschwaden zulassen.

Erfindungsgemäß wird die Aufgabe durch eine Heuwerbungsmaschine mit den kennzeichnenden Merkmalen des Anspruchs 1 gelöst.

Indem das Stellglied des Fahrwerks des wenigstens einen Arbeitsorgans mit einem den Schwadformer aufnehmenden Schwenkmechanismus gekoppelt ist, der die Bewegung des Schwadformers an die Bewegung des Stellgliedes der Fahrwerksverstellung bindet und ein Verschwenken des Schwadformers in wenigstens zwei Arbeitsstellungen zuläßt, wird sichergestellt, dass der Schwadformer in Abhängigkeit von der Lageänderung des Fahrwerks des Arbeitsorgans selbsttätig in die in der verschwenkten Stellung erforderliche Lage verbracht wird. Durch die direkte Koppelung des Schwenkmechanismus an die Bewegung des Stellgliedes wird außerdem erreicht, dass der Schwadformer sofort in die jeweilige Arbeits- bzw. Transportstellung verschwenkt, ohne dass die Heuwerbungsmaschine zuvor einen das mit dem Schwadformer zusammenarbeitende Arbeitsorgan in die jeweilige Position bewegenden Weg zurücklegen muss.

Eine vorteilhafte Ausgestaltung der Erfindung wird dann erreicht, wenn bei einer wenigstens zwei Arbeitsorgane aufnehmenden Heuwerbungsmaschine der den Schwadformer tragende Koppelmechanismus dem in Fahrtrichtung hinten liegenden Arbeitsorgan zugeordnet ist und in wenigstens zwei Arbeitsstellungen verschwenken kann, wobei durch den Schwadformer in einer ersten Arbeitsstellung ein Doppelschwaden und in der zweiten Arbeitsstellung zwei Einzelschwaden gebildet werden. Auf diese Weise ist es möglich mit einer einzigen Heuwerbungsmaschine je nach Menge des zu bewegenden Erntegutes verschiedene Schwadtypen zu erzeugen, wobei sich die dafür jeweils erforderliche Lage des Schwadformers selbsttätig einstellt.

Damit der von der zulässigen Breite der Heuwerbungsmaschine bei Straßentransport beeinflusste Durchmesser der Arbeitsorgane nicht von der Lage des Schwadformers in der Transportstellung eingeschränkt wird, nimmt der Schwadformer in der Transportstellung eine im rückwärtigen Bereich des ihm zugeordneten Arbeitsorgans liegende Position ein, von der er in die seitlich neben dem ihm zugeordneten Arbeitsorgan liegende Arbeitsposition verschwenkt werden kann.

Um das Verschwenken des Schwadformers von der Transportstellung in die Arbeitsstellung und zurück auf konstruktiv einfache Weise an die Bewegung des Stellgliedes des Fahrwerks des jeweiligen Arbeitsorgans zu koppeln, ist der Schwenkmechanismus einfachstenfalls als mehrgliedriges räumliches oder ebenes Getriebe ausgeführt.

Ein einfacher Aufbau dieses Getriebes wird dann erreicht, wenn der Koppelmechanismus von einem ebenen mehrgliedrigen Getriebe gebildet wird, welches sich aus einer Antriebsschwinge, eine diese Antriebsschwinge gelenkig mit einer Zwischenschwinge verbindenden Antriebskoppel und einer diese Zwischenschwinge mit einer Abtriebsschwinge verbindenden Abtriebskoppel zusammensetzt, wobei die Antriebsschwinge, die Zwischenschwinge und die Abtriebsschwinge von einem gemeinsamen Träger schwenkbeweglich aufgenommen werden

Eine besonders einfache Anordnung dieses Koppelmechanismus an der Heuwerbungsmaschine wird dann erreicht, wenn sich alle Schwenkachsen des Koppelmechanismus in vertikaler Richtung erstrecken, sodass der Schwenkmechanismus in einer horizontalen, die Arbeitsweise der Arbeitsorgane nicht beeinträchtigenden Ebene liegend in die Heuwerbungsmaschine integriert werden kann.

Um unter dem Gesichtspunkt einer geringen Transportlänge der Heuwerbungsmaschine ein Verschwenken des Schwadformers von der Arbeitsstellung in eine oberhalb des jeweiligen Rechkreisels liegende Transportposition zu erreichen, kann in einer weiteren vorteilhaften Ausführung der Koppelmechanismus auch in einer zur Horizontalen geneigten Ebene angeordnet sein, wobei die Schwenkachsen dann eine zur Vertikalen geneigte Lage einnehmen.

Eine konstruktiv besonders einfache Ausführung der Antriebsschwinge wird dann erreicht, wenn das Antriebsgetriebe des jeweiligen Arbeitsorgans selbst die Antriebsschwinge bildet. Auf diese Weise wird das ohnehin vorhandene Antriebsgetriebe gleichzeitig zur Realisierung der selbsttätigen Schwenkbewegung des Schwadformers genutzt.

In analoger Weise vereinfacht sich die Konstruktion des Schwenkmechanismus, wenn dessen Abtriebsschwinge als Schwadformer ausgebildet ist, sodass auch abtriebsseitig der ebenfalls ohnehin vorhandene Schwadformer in den Schwenkmechnaismus integriert wird.

Auf besonders einfache Weise wird die Gestellfestigkeit der Schwenkachsen des Schwenkmechanismus dadurch erreicht, dass sie drehbar vom Tragrahmen des jeweiligen Arbeitsorgans aufgenommen werden.

Damit stets sichergestellt ist, dass der Schwadformer beim Verschwenken des Arbeitsorgans in die möglichen Arbeitsstellungen stets die gleiche seitlich neben dem Arbeitsorgan liegende Arbeitsposition einnimmt, ist es notwendig, dass die Schwenkachsen der Antriebskoppel des Schwenkmechanismus in der Transportstellung auf einer Linie mit der Schwenkachse der Antriebsschwinge liegen. Die sich so ergebende Strecklage der Antriebskoppel stellt sicher, dass unabhängig davon, ob die Kolbenstange des als Hubzylinder ausgeführten Stellgliedes in den Hubzylinder einfährt oder aus diesem herausgeschoben wird, der Schwadformer stets in der gleichen Richtung in die möglichen Arbeitstsellungen verschwenkt wird.

Um den Schwenkbereich des Schwadformers von der Arbeitsstellung in die Transportstellung durch einen kostengünstigen, einen geringen Bauraum benötigenden Schwenkmechanismus und ein ebenfalls kostengünstiges, kurzbauendes Stellglied zu erreichen, ist es von Vorteil, wenn die Antriebskoppel das kürzeste Getriebeglied des Schwenkmechanismus ist.

Eine weitere bauraumverringernde Ausführung des Koppelmechanismus wird dann erreicht, wenn die die Abtriebskoppel mit der Abtriebsschwinge verbindende Schwenkachse von einer Langlochführung in der Abtriebskoppel aufgenommen wird und deren Verschiebbarkeit innerhalb dieser Langlochführung ein Stellorgan steuert. Auf diese Weise ist es möglich, den relativ großen Schwenkbereich des Schwadformers nur teilweise durch das Stellglied vornehmen zu lassen, wodurch wiederum ein kürzeres und kostengünstigeres Stellglied eingesetzt werden kann.

In besonders einfacher Weise ist das Stellorgan als Zugfeder ausgebildet, die so zwischen Tragrahmen und Schwadformer zwischengeschaltet ist, dass sie nach durchlaufener Strecklage das weitere Verschwenken des Schwadformers in eine der Arbeitsstellungen und die Transportstellung übernimmt und in dieser Stellung vibrationsarm hält. Während so einerseits ein kleineres als Hubzylinder ausgeführtes Stellglied eingesetzt werden kann, wird andererseits der Schwenkmechanismus in seinen Endlagen, der Transportstellung und den Arbeitsstellungen, verspannt, sodass verschleißbedingt zunehmendes Spiel im Bereich der Schwenkachsenlagerungen nicht zu einem Pendeln des Schwadformers in seinen Endlagen führt.

Weitere vorteilhafte Ausgestaltungen sind Gegenstand weiterer Unteransprüche und werden nachfolgend anhand von Zeichnungen näher erläutert.

Es zeigen
- Figur 1: eine erfindungsgemäße Heuwerbungsmaschine in der Draufsicht
- Figur 2: eine Detailansicht der erfindungsgemäßen Heuwerbungsmaschine nach Figur 1 in der Draufsicht
- Figur 3: zwei mögliche Arbeitsstellungen der erfindungsgemäßen Heuwerbungsmaschine in der Draufsicht
- Figur 4: kinematische Schemata des erfindungsgemäßen Schwenkmechanismus

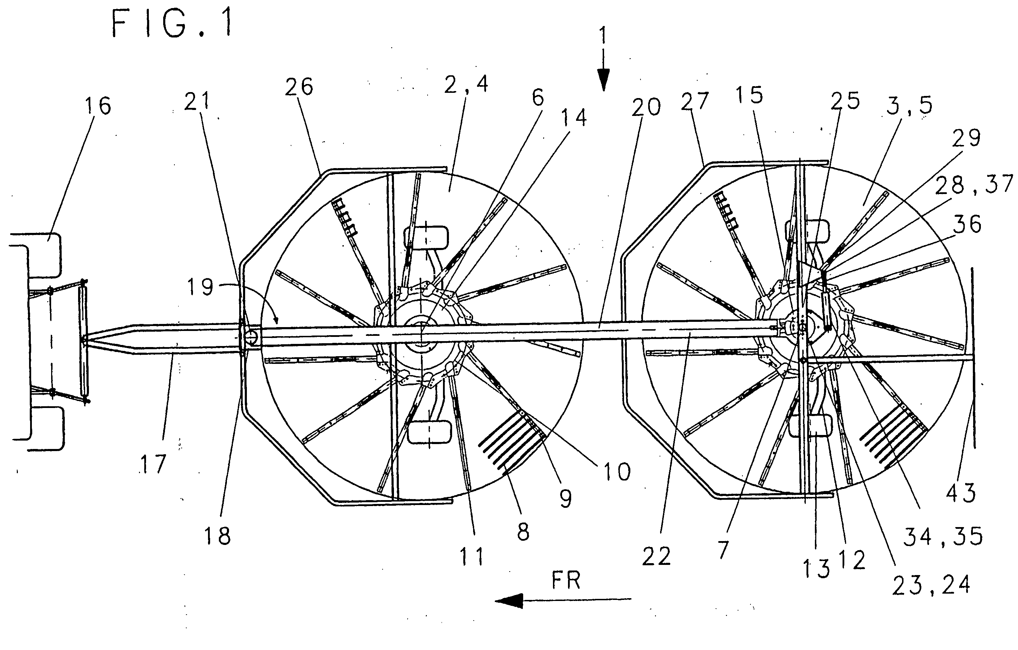

Die in Figur 1 dargestellte erfindungsgemäße Heuwerbungsmaschine 1 verfügt über ein in Fahrtrichtung FR vom liegendes und ein diesem nachgeordnetes als Rechkreisel 2, 3 ausgeführtes Arbeitsorgan 4, 5. Jeder der um eine annähernd senkrechte Achse 6, 7 umlaufenden Rechkreisel 2, 3 nimmt eine Vielzahl von an ihren radial außen liegenden Enden mit Rechzinken 8 versehene Tragarme 9 auf, die anderenends in eine nicht näher dargestellte und an sich bekannte Kurvensteuerung 10 münden, die die Tragarme 9 während einer Umdrehung der Rechkreisel 2, 3 um die Tragarmachsen 11 von einer bodennahen in eine bodenferne Position verschwenken, sodass die Rechzinken 8 in der Lage sind auf dem Boden liegendes Erntegut anzunehmen, zu transportieren und an anderer Stelle wieder abzulegen.

Jedem der Rechkreisel 2, 3 ist untenseitig ein beliebig ausgeführtes Fahrwerk 12 zugeordnet, welches den jeweiligen Rechkreisel 2, 3 über wenigstens ein Laufrad 13 auf dem Boden abstützt. Obenseitig nimmt jeder Rechkreisel 2, 3 Kreiselgetriebe 14, 15 auf, die die Rechkreisel 2, 3 um die vertikalen Achsen 6, 7 in Drehbewegung versetzen.

Frontseitig verfügt die Heuwerbungsmaschine 1 über eine an einem Trägerfahrzeug 16 adaptierbare Zugdeichsel 17, die in ihrem rückwärtigen Bereich ein Schwenkgetriebe 18 aufnimmt, welches über nicht dargestellte Gelenkwellen vom Trägerfahrzeug 16 angetrieben wird. Das Schwenkgetriebe 18 ist mit einem den vorderen Rechkreisel 2 aufnehmenden Tragrahmen 19 und einem den hinteren Rechkreisel 3 aufnehmenden Tragrahmen 20 in der Weise verbunden, dass der Tragrahmen 20 um die vertikale Achse 21 des Schwenkgetriebes 18 im Uhrzeigersinn und entgegen dem Uhrzeigersinn verschwenkt werden kann. Innerhalb des Tragrahmens 20 laufen Gelenkwellen 22, die die Antriebsenergie vom Schwenkgetriebe 18 auf das Kreiselgetriebe 15 des hinteren Rechkreisels 3 übertragen. Das Kreiselgetriebe 15 und die Kurvensteuerung 10 werden zudem im Bereich der vertikalen Drehachse 7 von einer als Zahnwelle 23 ausgeführten Schwenkachse 24 durchsetzt, die unterhalb der Kurvensteuerung 10 in an sich bekannter Weise drehfest mit dem Fahrwerk 12 des hinteren Rechkreisels 3 verbunden ist und obenseitig einen Querträger 25 durchsetzt und mit diesem im Bereich der Zahnwelle 23 in drehfester Verbindung steht.

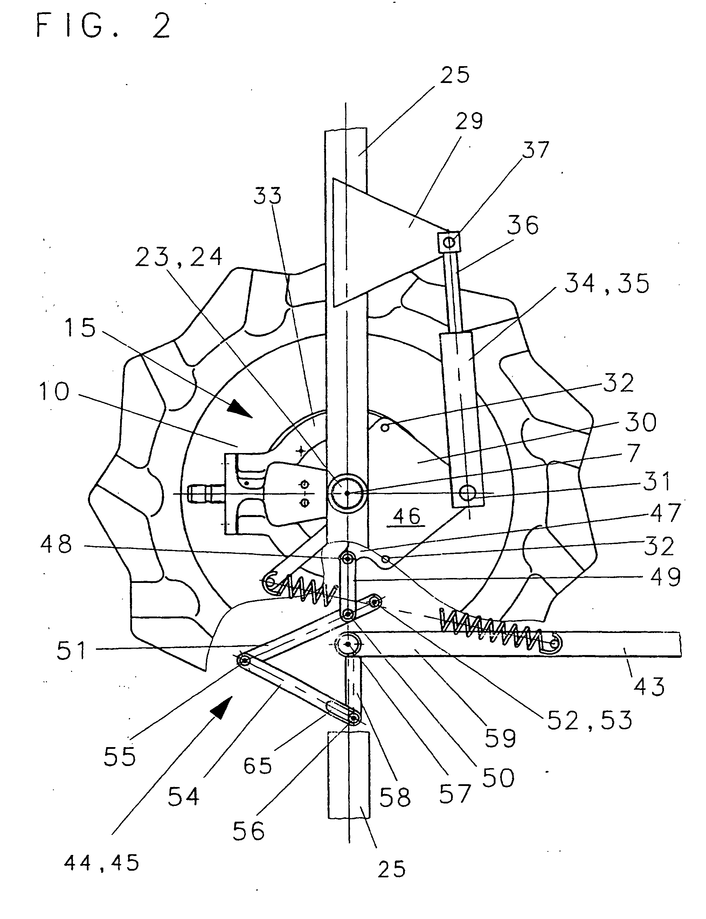

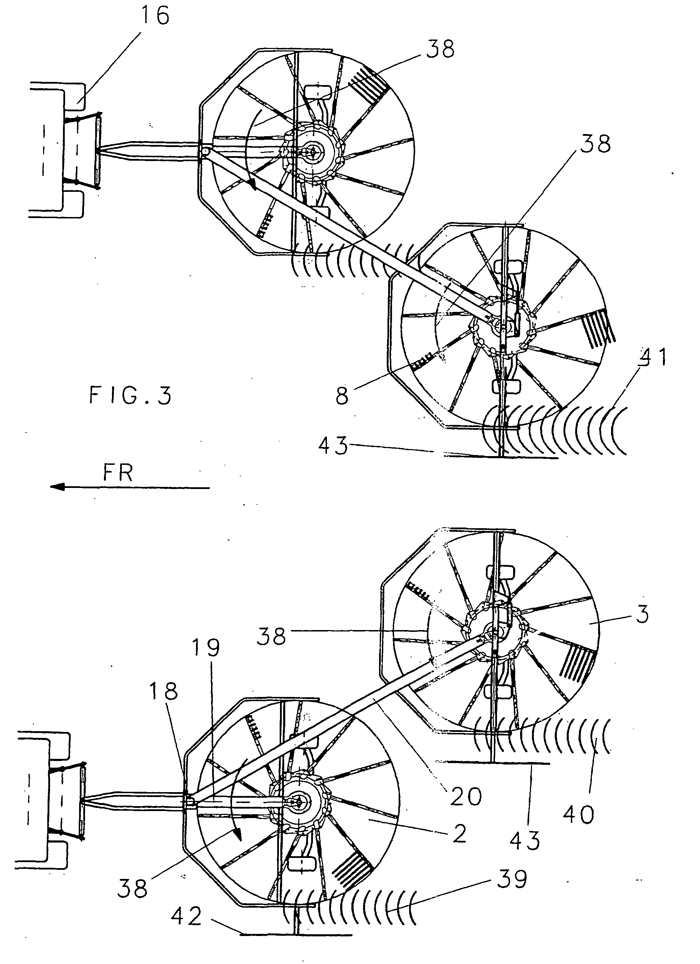

Jedem Rechkreisel 2, 3 sind zur Abschirmung der die Rechzinken 8 aufnehmenden Tragarme 9 Schutzbügel 26, 27 zugeordnet, wobei der Schutzbügel 27 des hinteren Rechkreisels 3 am Querträger 25 befestigt ist. Dem Querträger 25 ist ferner ein von einer Bohrung 28 durchsetzte Halteflansch 29 angeformt. Gemäß der Figuren 1 und 2 nimmt die Schwenkachse 24 einen deckelförmigen Träger 30 schwenkbeweglich auf, dem einenends ein in vertikaler Richtung weisender Bolzen 31 zugeordnet ist und der im einfachsten Fall die schwenkbewegliche Verbindung mit der Schwenkachse 24 dadurch erreicht, dass er mittels Schraubverbindungen 32 am Gehäuse 33 des auf der Schwenkachse 24 gelagerten Kreiselgetriebes 15 des hinteren Rechkreisels 3 befestigt ist. Der Bolzen 31 nimmt ein als Hubzylinder 34 ausgeführtes Stellglied 35 drehbeweglich auf, dessen Kolbenstange 36 im einfachsten Fall mittels vertikal gesichertem Bolzen 37 in der Bohrung 28 des Halteflansches 29 schwenkbeweglich geführt wird. Über ein nicht dargestelltes Leitungssystem kann der Hubzylinder 34 vom Trägerfahrzeug 16 aus druckbeaufschlagt werden, wobei die Kolbenstange 36 entweder in den Hubzylinder 34 hineinbewegt oder aus diesem herausgeschoben wird. Dabei wird das mit dem Querträger 25 drehfest verbundene Fahrwerk 12 des hinteren Rechkreisels 3 im Uhrzeigersinn oder entgegen dem Uhrzeigersinn um Achse 24 verschwenkt, wobei der über Tragrahmen 20 mit dem Schwenkgetriebe 18 verbundene hintere Rechkreisel 3 gemäß Figur 3 bei in Fahrtrichtung FR bewegtem Trägerfahrzeug 16 in wenigstens zwei Arbeitsstellungen verschwenkt werden kann. In einer ersten Arbeitsstellung befindet sich der hintere Rechkreisel 3 in einem rechtsseitig hinter dem vorderen Rechkreisel 2 liegenden Bereich, sodass die gemäß Pfeil 38 umlaufenden Rechkreisel 2, 3 das auf dem Boden liegende Erntegut zu zwei voneinander getrennten Einzelschwaden 39, 40 zusammenführen. In der zweiten Arbeitsstellung ist der hinterer Rechkreisel 3 in einem linksseitig hinter dem vorderen Rechkreisel 2 liegenden Bereich angeordnet, sodass die wiederum gemäß der Pfeile 38 umlaufenden Rechkreisel 2, 3 einen einzigen Doppelschwaden 41 bilden, wobei das vom vorderen Rechkreisel 2 zusammengeführte Erntegut an den hinteren Rechkreisel 3 übergeben wird. Damit die von den Rechkreiseln 2, 3 gebildeten Erntegutschwaden 39, 40, 41 in ihrer Breite einstellbar sind, können den schwadbildenden Rechkreiseln 2, 3 Schwadformer 42, 43 zugeordnet sein, die die Wurfbahn des von den Rechzinken 8 der Rechkreisel 2, 3 aufgenommenen Erntegutes quer zur Fahrtrichtung FR begrenzen.

Erfindungsgemäß sind wenigstens die dem hinteren Rechkreisel 3 zugeordneten Schwadformer 43 über einen noch näher zu beschreibenden Schwenkmechanismus 44 mit dem als Hubzylinder 34 ausgeführten Stellglied 35 des Fahrwerks 12 des jeweiligen Rechkreisels 3 gekoppelt, sodass die Verstellung des Fahrwerks 12 zugleich auch zu einem selbsttätigen Verschwenken des Schwadformers 43 von der Transportstellung (Figur 1) in eine der Arbeitsstellungen (Figur 3) und umgekehrt führt. Das Ausfahren der Kolbenstange 36 des Hubzylinders 34 ruft dabei ein Verschwenken des hinteren Rechkreisels 3 in die Arbeitstsellung hervor, in der die Arbeitsorgane 4, 5 der Heuwerbungsmaschine 1 einen Doppelschwaden 41 formen. Demgegenüber verschwenkt der hintere Rechkreisel 3 beim Einfahren der Kolbenstange 36 in den Hubzylinder 34 in die Arbeitsstellung in der die Arbeitsorgane 4, 5 der Heuwerbungsmaschine 1 zwei voneinander getrennte Einzelschwaden 39, 40 bilden.

Der noch näher zu beschreibende Schwenkmechanismus 44 ist so dimensioniert, dass der Schwadformer 43 in der Transportstellung eine im rückwärtigen Bereich des Rechkreisels 3 liegende Position einnimmt, aus der er in eine seitlich nebem dem Rechkreisel liegende Position verschwenken kann, die in Abhängigkeit von der Stellung der Kolbenstange 36 des Hubzylinders 34 die Doppel- oder Einzelschwaden 39, 40, 41 bildende Arbeitsstellung verkörpert.

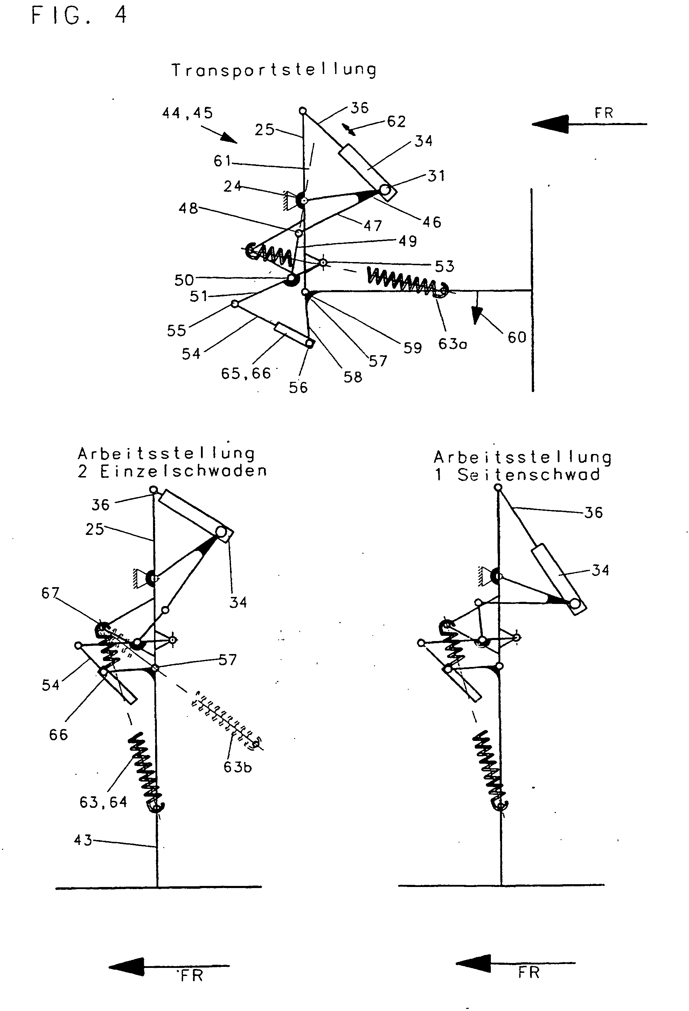

Damit die Bewegung der Kolbenstange 36 auf konstruktiv einfache Weise in eine Schwenkbewegung des Schwadformers 43 umgewandelt werden kann, ist der Schwenkmechanismus 44 als ebenes mehrgliedriges Getriebe 45 ausgeführt (Figuren 2 und 4). Im dargestellten Ausführungsbeispiel wird die Antriebsschwinge 46 von dem deckelförmigen Träger 30 gebildet, der über Schraubverbindungen 32 mit dem Gehäuse 33 des Kreiselgetriebes 15 verbunden ist, sodass die Antriebsschwinge 46 die Schwenkachse 24 des Fahrwerks 12 drehbeweglich umgreift. Der Antriebsschwinge 46 ist ein Steg 47 angeformt, der von einer Schwenkachse 48 durchsetzt wird, die im einfachsten Fall als an sich bekannter und deshalb nicht dargestellter, in vertikaler Richtung gesicherter Bolzen ausgeführt sein kann. Unter konstruktionsvereinfachenden Gesichtspunkten können die Schwenkachse 48 und der Bolzen 31 auch direkt auf dem Gehäuse 33 des Kreiselgetriebes 15 angeordnet sein, sodass der deckelförmige Träger 30 entfällt und die Antriebsschwinge 46 vom Gehäuse 33 gebildet wird. Die Schwenkachse 48 nimmt außerdem eine stegförmige Antriebskoppel 49 drehbeweglich auf, die anderenends von einer weiteren Schwenkachse 50 durchsetzt wird, an der eine im einfachsten Fall ebenfalls stegförmige Zwischenschwinge 51 drehbar angelenkt ist. Die Zwischenschwinge 51 ist einenends über eine als Bolzen 52 ausgeführte Schwenkachse 53 mit dem Querträger 25 schwenkbeweglich verbunden. Anderenends wird die Zwischenschwinge 51 von einer die Zwischenschwinge 51 gelenkig mit einer Abtriebskoppel 54 verbindenden Schwenkachse 55 durchsetzt. Die Abtriebskoppel 54 wird von einer weiteren Schwenkachse 56 durchsetzt, über die der Schwenkmechanismus 44 gelenkig mit dem ebenfalls im Querträger 25 um Schwenkachse 57 drehbar gelagerten Schwadformer 43 verbunden ist. Im dargestellten Ausführungsbeispiel verfügt der Schwadformer 43 über einen an ihm befestigten Steg 58, der einenends die Schwenkachse 56 drehbeweglich aufnimmt. Auf diese Weise bildet der mit dem Steg 58 versehene Schwadformer 43 konstruktionsvereinfachend die Abtriebsschwinge 59 des Schwenkmechanismus 44.

Damit der Schwenkmechanismus 44 als ebenes Getriebe 45 ausgeführt werden kann und bauraumsparend im Bereich des jeweiligen Arbeitsorgans 5 in einer horizontalen, die Bewegung des Arbeitsorgans 5 nicht behindernden Lage anordenbar ist, verlaufen alle Schwenkachsen 24, 31, 48, 50, 53, 55-57 des Schwenkmechanismus 44 in vertikaler Richtung. In einer weitern nicht dargestellten Ausführungsform kann der Schwenkmechanismus 44 auch in einer zur Horizontalen geneigten Ebene angeordnet sein, sodass der Schwadformer in der Transportstellung oberhalb des ihm zugeordneten Arbeitsorgans 5 liegt und beim Verschwenken in die Transportstellungen in eine seitlich neben dem jeweiligen Arbeistorgan liegende Arbeistposition gelangt. Im einfachsten Fall ist eine derartige Anordnung des Schwenkmechanismus 44 dadurch zu realisieren, dass die die Antriebskoppel 49 mit der Antriebsschwinge 46 gelenkig verbindende Schwenkachse 48 nicht wie in Figur 2 dargestellt in vertikale Richtung, sondern in horizontale Richtung weisend angeordnet ist und eine oder mehrere der Schwenkachsen 48, 50, 52, 55, 56 von Kugelgelenken aufgenommen werden.

Wird der in Mittelstellung (obere Darstellung in Figur 4) befindliche doppeltwirkende Hubzylinder 34 druckbeaufschlagt, sodass die Kolbenstange 36 in den Hubzylinder 34 einfährt (mittlere Darstellung in Figur 4) oder aus diesem herausgeschoben wird (untere Darstellung in Figur 4), werden der Querrahmen 25 und die Abtriebskoppel 46 durch den Hubzylinder 34 um Achse 24 verschwenkt, wobei die Koppelglieder 25, 49, 51, 54, 59 des Schwenkmechanismus 44 den Schwadformer 43 um die Schwenkachse 57 stets gemäß Pfeil 60 in die Arbeitsstellung bewegen, in der eine mit wenigstens zwei Arbeitsorganen 4, 5 versehene Heuwerbungsmaschine 1 entweder zwei Einzelschwaden 39, 40 oder einen Doppelschwaden 41 bildet. Damit der Koppelmechanismus 44 unabhängig davon, ob die Kolbenstange 36 in den Hubzylinder 34 hineinbewegt oder aus diesem herausgeschoben wird stets ein Verschwenken des Schwadformers 43 in die Arbeitsstellung gemäß Pfeil 60 ermöglicht, ist es notwendig, dass die Antriebskoppel 49 mit ihren Schwenkachsen 48, 50 in der Transportstellung auf einer Geraden 61 mit der Schwenkachse 24 der Antriebskoppel 46 liegt, sie sich also in Strecklage zur Schwenkachse 24 der Antriebskoppel 46 befindet. Damit ist sichergestellt, dass die mit der Zwischenschwinge 51 verbundene Abtriebskoppel 54 und die an ihr angelenkte Abtriebsschwinge 59 stets im Uhrzeigersinn in die Arbeitsstellung bewegt werden, unabhängig davon, ob das durch Schwenkachse 24 verstellte Fahrwerk 12 ein Schwenken des Rechkreisels 3 nach links oder rechts (Figur 3) bewirkt.

Um mit einem möglichst geringen Zylinderhub 62 das Verschwenken des Schwadformers 43 zu ermöglichen und einen insgesamt geringen Bauraum benötigenden Schwenkmechanismus zu erhalten, ist es von Vorteil, wenn die Antriebskoppel 49 das kürzeste Getriebeglied des erfindungsgemäßen Schwenkmechanismus 44 ist.

Eine weitere Verringerung des erforderlichen Zylinderhubes 62 und des notwendigen Bauraumes für den Schwenkmechnaismus 44 wird dann erreicht, wenn dem Schwenkmechanismus 44 ein im einfachsten Fall als Zugfeder 63 ausgeführtes Stellorgan 64 zugeordnet ist, welches wenigstens teilweise das Verschwenken des Schwenkmechanismus 44 übernimmt. Hierfür kann in einer weiteren vorteilhaften Ausführung der Abtriebskoppel 54 eine Langlochführung 65 zugeordnet sein, sodass die einenends an der Abtriebsschwinge 59 angeordnete Schwenkachse 56 von einem Schubgelenk 66 der Abtriebskoppel 54 aufgenommen wird. Die Zugfeder 63 ist so im Schwenkmechanismus 44 angeordnet, dass sie die den Schwadformer 43 aufnehmende Abtriebskoppel 59 mit dem Querträger 25 verbindet. Dabei steht die Zugfeder 63 unter ständiger Vorspannung. In der Transportstellung (obere Abbildung in Figur 4) führt dies dazu, dass die Zugfeder 63a bestrebt ist, den Schwadformer 43 in Richtung des Querträgers 25 zu ziehen, wobei die Schwenkachse 56 am schwadformerseitigen Ende des Schubgelenks 66 anliegt. Wird nun der Hubzylinder 34 druckbeaufschlagt, verschwenkt der Schwenkmechanismus 44 den Schwadformer 43 solange gegen die Wirkung der Zugfeder 63 bis diese sich in Strecklage 63b (getrichelte Darstellung in Figur 4, linke untere Abbildung) zum Anlenkpunkt 57 des Schwadformers 43 am Querträger 25 befindet. Nach überwundener Strecklage 63b übernimmt die Zugfeder 63 das weitere Verschwenken des Schwenkmechanismus 44 bis der Schwadformer 43 seine Arbeitsstellung erreicht hat. In der Arbeitsstellung liegt dann die Schwenkachse 56 der Abtriebsschwinge 59 anderenends am Schubgelenk 66 an. Soll der Schwadformer 43 nun von der Arbeitsstellung in die Transportstellung verschwenkt werden, übernimmt wiederum der Hubzylinder 34 solange die Verschwenkfunktion bis die Zugfeder 63 wieder ihre Stercklage 63b erreicht hat. Nach überwundener Strecklage 63b bis zum Erreichen der Transportstellung wird die Schwenkfunktion dann wiederum von der Zugfeder 63 übernommen.

Die am Beispiel einer zwei Arbeitsorgane 4, 5 aufweisenden Heuwerbungsmaschine 1 näher erläuterte Erfindung ist nicht auf eine solche Ausführung beschränkt, sondern kann auch an Heuwerbungsmaschinen mit nur einem Arbeitsorgan (4, 5) oder mehr als zwei Arbeitsorganen (4, 5) eingesetzt werden, um die beschriebenen Effekte zu erzielen.

### Bezugszeichenliste

- 1: Heuwerbungsmaschine
- 2: Rechkreisel
- 3: Rechkreisel
- 4: Arbeitsorgan
- 5: Arbeitsorgan
- 6: Achse
- 7: Achse
- 8: Rechzinken
- 9: Tragarm
- 10: Kurvensteuerung
- 11: Tragarmachse
- 12: Fahrwerk
- 13: Laufrad
- 14: Kreiselgetriebe
- 15: Kreiselgetriebe
- 16: Trägerfahrzeug
- 17: Zugdeichsel
- 18: Schwenkgetriebe
- 19: Tragrahmen
- 20: Tragrahmen
- 21: Achse
- 22: Gelenkwelle
- 23: Zahnwelle
- 24: Schwenkachse
- 25: Querträger
- 26: Schutzbügel
- 27: Schutzbügel
- 28: Bohrung
- 29: Halteflansch
- 30: deckelförmiger Träger
- 31: Bolzen
- 32: Schraubverbindungen
- 33: Gehäuse
- 34: Hubzylinder
- 35: Stellglied
- 36: Kolbenstange
- 37: Bolzen
- 38: Pfeilrichtung
- 39: Einzelschwaden
- 40: Einzelschwaden
- 41: Doppelschwaden
- 42: Schwadformer
- 43: Schwadformer
- 44: Schwenkmechanismus
- 45: mehrgliedriges Getriebe
- 46: Antriebsschwinge
- 47: Steg
- 48: Schwenkachse
- 49: Antriebskoppel
- 50: Schwenkachse
- 51: Zwischenschwinge
- 52: Bolzen
- 53: Schwenkachse
- 54: Abtriebskoppel
- 55: Schwenkachse
- 56: Schwenkachse
- 57: Schwenkachse
- 58: Steg
- 59: Abtriebsschwinge
- 60: Pfeilrichtung
- 61: Gerade
- 62: Zylinderhub
- 63: Zugfeder
- 63a: Zugfeder in Transportstellung
- 63b: Zugfeder in Strecklage
- 64: Stellorgan
- 65: Langlochführung
- 66: Schubgelenk
- 67: Anlenkpunkt

- FR: Fahrtrichtung

## Patentansprüche

1. Heuwerbungsmaschine mit wenigstens einem an einem Tragrahmen angeordneten von einem Antriebsgetriebe um eine im Wesentlichen vertikale Achse umlaufend angetriebenen, als Rechkreisel ausgeführten und von einem wenigstens ein Laufrad aufweisenden Fahrwerk gegen den Boden abgestützten Arbeitsorgan, wobei das wenigstens eine Arbeitsorgan mit dem ihm zugeordneten Fahrwerk mittels einem am Tragrahmen angeordneten Stellglied in verschiedene Positionen zum Tragrahmen verschwenkt werden kann und dem wenigstens einen Arbeitsorgan ein Schwadformer zugeordnet ist,
**dadurch gekennzeichnet,**
**dass** dem das Fahrwerk (12) des wenigstens einen Arbeitsorgans (5) verstellenden Stellglied (35) ein den Schwadformer (43) aufnehmender Schwenkmechanismus (44) derart zugeordnet ist, dass dieser die Bewegung des Schwadformers (43) an die Bewegung des Stellgliedes (35) der Fahrwerksverstellung (12, 24) so miteinader koppelt, dass ein Verschwenken des Schwadformers (43) in wenigstens zwei Arbeitsstellungen und in die Transportstellung möglich ist.

2. Heuwerbungsmaschine nach Anspruch 1,
**dadurch gekennzeichnet,**
**dass** der den Schwadformer (43) tragende Schwenkmechanismus (44) bei mehreren in Fahrtrichtung FR zueinander gestaffelt angeordneten Arbeitsorganen (4, 5) wenigstens einem in Fahrtrichtung FR hinten liegenden Arbeitsorgan (5) zugeordnet ist und den Schwadformer (43) in wenigstens zwei Arbeitsstellungen verbringt, wobei in einer ersten Arbeitsstellung ein Großschwad (41) und in einer zweiten Arbeitsstellung wenigstens zwei Einzelschwaden (39, 40) gebildet werden.

3. Heuwerbungsmaschine nach einem oder mehreren der vorhergehenden Ansprüche,
**dadurch gekennzeichnet,**
**dass** der Schwadformer (43) in der Transportstellung im in Fahrtrichtung FR gesehen rückwärtigen Bereich des ihm zugeordneten Arbeitsorgans (5) liegt und in der oder den Arbeitsstellungen in den Seitenbereich dieses Arbeitsorgans (5) verschwenkt wird.

4. Heuwerbungsmaschine nach einem oder mehreren der vorhergehenden Ansprüche,
**dadurch gekennzeichnet,**
**dass** der Schwadformer (43) in der Transportstellung oberhalb des wenigstens einen Arbeitsorgans (5) angeordnet ist und in der oder den Arbeitsstellungen in den Seitenbereich dieses Arbeitsorgans (5) verschwenkt wird.

5. Heuwerbungsmaschine nach einem oder mehreren der vorhergehenden Ansprüche,
**dadurch gekennzeichnet,**
**dass** der Koppelmechanismus (44) als mehrgliedriges ebenes oder räumliches Getriebe (45) ausgeführt ist.

6. Heuwerbungsmaschine nach Anspruch 5,
**dadurch gekennzeichnet,**
**dass** der Koppelmechanismus (44) ein ebenes mehrgliedriges Getriebe (45) bildet, dessen Antriebsschwinge (46) über eine Antriebskoppel (49) gelenkig mit einer Zwischenschwinge (51) verbunden ist, wobei eine schwenkbewegliche Abtriebskoppel (54) die Zwischenschwinge (51) mit einer Abtriebsschwinge (59) gelenkig verbindet und die Antriebsschwinge (46), die Zwischenschwinge (51) und die Abtriebsschwinge (59) von einem gemeinsamen Träger (25) schwenkbeweglich aufgenommen werden

7. Heuwerbungsmaschine nach Anspruch 6,
**dadurch gekennzeichnet,**
**dass** sich die Schwenkachsen (24, 31, 48, 50, 53, 55, 56, 57) der Getriebeglieder (25, 46, 47, 49, 51, 54, 59) des Koppelmechanismus (44) in vertikaler Richtung erstrecken.

8. Heuwerbungsmaschine nach Anspruch 6,
**dadurch gekennzeichnet,**
**dass** sich wenigsten ein Teil der Schwenkachsen (24, 31, 48, 50, 53, 55, 56, 57) der Getriebeglieder (25, 46, 47, 49, 51, 54, 59) des Koppelmechanismus (44) in einer zur Vertikalen geneigten Ebene erstrecken.

9. Heuwerbungsmaschine nach einem oder mehreren der vorhergehenden Ansprüche,
**dadurch gekennzeichnet,**
**dass** die Antriebsschwinge (46) des Schwenkmechanismus (44) vom Gehäuse (33) des Kreiselgetriebes (15) des Arbeitsorgans (5) gebildet wird.

10. Heuwerbungsmaschine nach einem oder mehreren der vorhergehenden Ansprüche,
**dadurch gekennzeichnet,**
**dass** die Abtriebsschwinge (59) des Schwenkmechanismus (44) als Schwadformer (43) ausgebildet ist.

11. Heuwerbungsmaschine nach einem oder mehreren der vorhergehenden Ansprüche,
**dadurch gekennzeichnet,**
**dass** in der Transportstellung des Schwadformers (43) die Schwenkachsen (48, 50) der Antriebskoppel (49) auf einer Linie (61) mit der Schwenkachse (24) der Antriebsschwinge (46) liegen.

12. Heuwerbungsmaschine nach einem oder mehreren der vorhergehenden Ansprüche,
**dadurch gekennzeichnet,**
**dass** die Antriebskoppel (49) das kürzeste Getriebeglied des Schwenkmechanismus (44) ist.

13. Heuwerbungsmaschine nach einem oder mehreren der vorhergehenden Ansprüche,
**dadurch gekennzeichnet,**
**dass** die die Abtriebsschwinge (59) mit der Abtriebskoppel (54) verbindende Schwenkachse (56) in einer Langlochführung (65, 66) der Abtriebskoppel (54) verschiebbar gelagert ist und die Verschiebbarkeit durch ein Stellorgan (64) unterstützt wird.

14. Heuwerbungsmaschine nach Anspruch 13,
**dadurch gekennzeichnet,**
**dass** das Stellorgan (64) als Zugfeder (63) ausgebildet ist und zwischen der Abtriebsschwinge (59) und dem Tragrahmen (25) der Abtriebsschwinge (59) in der Weise zwischengeschaltet ist, dass die Zugfeder (63) nach durchlaufener Strecklage (63b) die Bewegung des Schwadformers (43) in die Transportstellung und in die Arbeitsstellungen übernimmt.

15. Heuwerbungsmaschine nach einem oder mehreren der vorhergehenden Ansprüche,
**dadurch gekennzeichnet,**
**dass** das Stellglied (35) des Arbeitsorgans (5) als doppeltwirkender Hubzylinder (34) ausgebildet ist.

## Claims

1. A haymaking machine comprising at least one working member which is arranged on a carrier frame and which is driven in rotation by a drive transmission assembly about a substantially vertical axis and which is in the form of a rotary rake and which is supported in relation to the ground by a chassis having at least one support wheel, wherein the at least one working member with the chassis associated therewith can be pivoted into various positions relative to the carrier frame by means of an adjusting member arranged on the carrier frame and a swathe forming device is associated with the at least one working member,
**characterised in that**
a pivoting mechanism (44) which accommodates the swathe forming device (43) is associated with the adjusting member (35) which adjusts the chassis (12) of the at least one working member (5) in such a way that it couples the movement of the swathe forming device (43) to the movement of the adjusting member (35) of the chassis adjusting means (12, 24) so that pivotal movement of the swathe forming device (43) is possible into at least two working positions and into the transport position.

2. A haymaking machine according to claim 1 **characterised in that** the pivoting mechanism (44) carrying the swathe forming device (43), with a plurality of working members (4, 5) arranged in mutually staggered relationship in the direction of travel FR, is associated with at least one working member (5) which is disposed rearwardly in the direction of travel FR and moves the swathe forming device (43) into at least two working positions, wherein a large swathe (41) is formed in a first working position and at least two individual swathes (39, 40) are formed in a second working position.

3. A haymaking machine according to one or more of the preceding claims
**characterised in that** in the transport position the swathe forming device (43) is in the region which is rearward as viewed in the direction of travel FR of the working member (5) associated therewith and in the working position or positions is pivoted into the side region of said working member (5).

4. A haymaking machine according to one or more of the preceding claims **characterised in that** in the transport position the swathe forming device (43) is arranged above the at least one working member (5) and in the working position or positions is pivoted into the side region of said working member (5).

5. A haymaking machine according to one or more of the preceding claims **characterised in that** the coupling mechanism (44) is in the form of a multi-member flat or three-dimensional transmission assembly (45).

6. A haymaking machine according to claim 5 **characterised in that** the coupling mechanism (44) forms a flat multi-member transmission assembly (45) whose oscillating drive member (46) is pivotably connected by way of a drive coupling member (49) to an intermediate oscillating member (51), wherein a pivotably movable drive output coupling member (54) pivotably connects the intermediate oscillating member (51) to an oscillating drive output member (59) and the oscillating drive member (46), the intermediate oscillating member (51) and the oscillating drive output member (59) are pivotably movably accommodated by a common carrier (25).

7. A haymaking machine according to claim 6 **characterised in that** the pivot axes (24, 31, 48, 50, 53, 55, 56, 57) of the transmission members (25, 46, 47, 49, 51, 54, 59) of the coupling mechanism (44) extend in a vertical direction.

8. A haymaking machine according to claim 6 **characterised in that** at least a part of the pivot axes (24, 31, 48, 50, 53, 55, 56, 57) of the transmission members (25, 46, 47, 49, 51, 54, 59) of the coupling mechanism (44) extend in a plane inclined relative to the vertical.

9. A haymaking machine according to one or more of the preceding claims **characterised in that** the oscillating drive member (46) of the pivot mechanism (44) is formed by the housing (33) of the rotor transmission (15) of the working implement (5).

10. A haymaking machine according to one or more of the preceding claims **characterised in that** the oscillating drive output member (59) of the pivot mechanism (44) is in the form of a swathe forming device (43).

11. A haymaking machine according to one or more of the preceding claims **characterised in that** in the transport position of the swathe forming device (43) the pivot axes (48, 50) of the drive coupling member (49) lie on a line (61) with the pivot axis (24) of the oscillating drive member (46).

12. A haymaking machine according to one or more of the preceding claims **characterised in that** the drive coupling member (49) is the shortest transmission member of the pivoting mechanism (44).

13. A haymaking machine according to one or more of the preceding claims **characterised in that** the pivot axis (56) connecting the oscillating drive output member (59) to the drive output coupling member (54) is mounted displaceably in a slot guide (65, 66) of the drive output coupling member (54) and the displaceability is promoted by a control member (64).

14. A haymaking machine according to claim 13 **characterised in that** the control member (64) is in the form of a tension spring (63) and is interposed between the oscillating drive output member (59) and the carrier frame (25) of the oscillating drive output member (59) in such a way that, after having passed through the straight position (63b), the tension spring (63) takes over the movement of the swathe forming device (43) into the transport transmission and into the working positions.

15. A haymaking machine according to one or more of the preceding claims **characterised in that** the control member (35) of the working implement (5) is in the form of a double-acting stroke cylinder (34).

## Revendications

1. Machine de fenaison comportant au moins un organe de travail qui est disposé sur un châssis porteur, est entraîné en rotation autour d'un axe essentiellement vertical par un mécanisme d'entraînement, est agencé sous la forme d'une toupie, et prend appui sur le sol par l'intermédiaire d'un train de roulement pourvu d'au moins une roue, l'organe de travail au nombre d'au moins un pouvant être amené par pivotement dans différentes positions par rapport au châssis porteur au moyen d'un vérin disposé sur ledit châssis porteur et un moyen de formation d'andain étant associé à l'organe de travail au nombre d'au moins un, **caractérisé par le fait qu'**au vérin (35) de réglage du train de roulement (12) de l'organe de travail (5), au nombre d'au moins un, est associé un mécanisme de pivotement (44) qui porte le moyen de formation d'andain (44), lequel mécanisme de pivotement lie entre eux le mouvement du moyen de formation d'andain (43) et le mouvement du vérin (35) de réglage du train de roulement (12, 24), d'une manière telle qu'un pivotement du moyen de formation d'andain (43) dans au moins deux positions de travail et dans la position de transport soit possible.

2. Machine de fenaison selon la revendication 1, **caractérisée par le fait que** le mécanisme de pivotement (44) qui porte le moyen de formation d'andain (44), dans le cas de plusieurs organes de travail (4, 5) décalés les uns par rapport aux autres dans la direction de déplacement FR, est associé à au moins un organe de travail (5) disposé derrière vu dans la direction de déplacement et déplace le moyen de formation d'andain (43) dans au moins deux positions de travail, un gros andain (41) étant formé dans une première position de travail et au moins deux andains (39, 40) élémentaires étant formés dans une deuxième position de travail.

3. Machine de fenaison selon une ou plusieurs des revendications précédentes, **caractérisée par le fait que** le moyen de formation d'andain (43), dans la position de transport, est situé dans la zone derrière, vu dans la direction de déplacement FR, l'organe de travail (5) qui lui est associé et, dans la ou les position(s) de travail, est amené par pivotement dans la zone sur le côté dudit organe de travail (5).

4. Machine de fenaison selon une ou plusieurs des revendications précédentes, **caractérisée par le fait que** le moyen de formation d'andain (43), dans la position de transport, est disposé au-dessus de l'organe de travail (5), au nombre d'au moins un et, dans la ou les position(s) de travail, est amené par pivotement dans la zone sur le côté dudit organe de travail (5).

5. Machine de fenaison selon une ou plusieurs des revendications précédentes, **caractérisée par le fait que** le mécanisme de couplage (44) est agencé en mécanisme (45) à plusieurs éléments plan ou tridimensionnel.

6. Machine de fenaison selon la revendication 5, **caractérisée par le fait que** le mécanisme de couplage (44) est un mécanisme (45) à plusieurs éléments, dont le bras oscillant d'entrée (46) est relié de manière articulée à un bras oscillant intermédiaire (51) par le biais d'une biellette d'entrée (49), une biellette de sortie (54) pivotante reliant de manière articulée le bras oscillant intermédiaire (51) à un bras oscillant de sortie (59), le bras oscillant d'entrée (46), le bras oscillant intermédiaire (51) et le bras oscillant de sortie (59) étant portés avec possibilité de pivotement par un support commun (25).

7. Machine de fenaison selon la revendication 6, **caractérisée par le fait que** les axes de pivotement (24, 31, 48, 50, 53, 55, 56, 57) des éléments (25, 46, 47, 49, 51, 54, 59) du mécanisme de couplage (44) s'étendent dans la direction verticale.

8. Machine de fenaison selon la revendication 6, **caractérisée par le fait qu'**au moins une partie des axes de pivotement (24, 31, 48, 50, 53, 55, 56, 57) des éléments (25, 46, 47, 49, 51, 54, 59) du mécanisme de couplage (44) s'étendent dans un plan incliné par rapport à la verticale.

9. Machine de fenaison selon une ou plusieurs des revendications précédentes, **caractérisée par le fait que** le bras oscillant d'entrée (46) du mécanisme de pivotement (44) est formé par le carter (33) d'engrenage de toupie (15) de l'organe de travail (5).

10. Machine de fenaison selon une ou plusieurs des revendications précédentes, **caractérisée par le fait que** le bras oscillant de sortie (59) du mécanisme de pivotement (44) est conformé en moyen de formation d'andain (43).

11. Machine de fenaison selon une ou plusieurs des revendications précédentes, **caractérisée par le fait que** dans la position de transport du moyen de formation d'andain (43), les axes de pivotement (48, 50) de la biellette d'entrée (49) sont situés sur une ligne (61) avec l'axe de pivotement (24) du bras oscillant d'entrée (46).

12. Machine de fenaison selon une ou plusieurs des revendications précédentes, **caractérisée par le fait que** la biellette d'entrée (49) est l'élément le plus court du mécanisme de pivotement (44).

13. Machine de fenaison selon une ou plusieurs des revendications précédentes, **caractérisée par le fait que** l'axe de pivotement (56) qui relie le bras oscillant de sortie (59) à la biellette de sortie (54) est monté coulissant dans un guidage oblong (65, 66) de la biellette de sortie (54) et que le coulissement est assisté par un organe de rappel (64).

14. Machine de fenaison selon la revendication 13, **caractérisée par le fait que** l'organe de rappel (64) est conformé en ressort de traction (63) et est placé entre le bras oscillant de sortie (59) et le support (25) du bras oscillant de sortie (59) de manière telle que le ressort de traction (63), une fois la distance (63b) parcourue assure le déplacement du moyen de formation d'andain (43) dans la position de transport et dans la position de travail.

15. Machine de fenaison selon une ou plusieurs des revendications précédentes, **caractérisée par le fait que** le vérin (35) de réglage de l'organe de travail (5) est agencé en vérin hydraulique (34) à double effet.
